# EUROPEAN PATENT SPECIFICATION

(11) **EP 4 257 984 B1**
(45) Date of publication and mention of the grant of the patent: **23.07.2025**
(21) Application number: 20963958.2
(22) Date of filing: 03.12.2020
(51) Int. Cl.: G01N 35/00, G01N 33/50, G01N 15/14, G01N 15/10, G01N 15/1429, G01N 15/1433

(54) **SAMPLE ANALYSIS SYSTEM AND METHOD, SAMPLE IMAGE ANALYSIS SYSTEM AND BLOOD ANALYZER**
PROBENANALYSESYSTEM UND -VERFAHREN, PROBENBILDANALYSESYSTEM UND BLUTANALYSEGERÄT
SYSTÈME ET PROCÉDÉ D'ANALYSE D'ÉCHANTILLONS, SYSTÈME D'ANALYSE D'IMAGES D'ÉCHANTILLONS ET DISPOSITIF D'ANALYSE DE SANG

(43) Date of publication of application: 11.10.2023
(73) Proprietor: Shenzhen Mindray Bio-Medical Electronics Co., Ltd, Shenzhen, Guangdong 518057 (CN)
(72) Inventor: YE, Yi, Shenzhen, Guangdong 518057 (CN); YE, Bo, Shenzhen, Guangdong 518057 (CN); XING, Yuan, Shenzhen, Guangdong 518057 (CN); QI, Huan, Shenzhen, Guangdong 518057 (CN); YU, Shan, Shenzhen, Guangdong 518057 (CN)
(74) Representative: KIPA AB
(86) International application number: PCT/CN2020/133691
(87) International publication number: WO 2022/116112

(56) References cited:
- CN-A- 101 685 060
- CN-A- 101 852 798
- CN-A- 102 109 529
- CN-A- 108 333 178
- CN-A- 108 603 817
- CN-A- 109 596 852
- CN-A- 111 856 045
- US-A- 4 761 075
- US-A1- 2010 248 374
- US-A1- 2011 208 536
- US-B2- 8 977 030

## Description

### TECHNICAL FIELD

The disclosure relates to the field of sample analysis technologies, and more specifically to a sample analysis system and method, a sample image analysis system, and a hematology analyzer.

### BACKGROUND

With the rapid development of clinical technologies, in routine tests using a large number of automated blood cell analyzers, automation and intelligence of devices are increasingly improved, which improves the efficiency of tests and reduces the working intensity of staff. Meanwhile, the blood cell analyzers can still only be used as a screening means in morphological examination. When suspicious conditions are encountered, it is necessary to perform morphological examination on samples. Therefore, a procedure of a clinical laboratory is generally as follows: testing samples using a blood cell analyzer; performing slide smearing and staining for a sample that triggers retest rules pre-formulated by the laboratory; and performing morphological examination on a blood smear, and outputting an examination result.

In the above procedure, whether a retest is required depends on the test result of the blood cell analyzer. The morphological examination during the retest based on the test result can only output a qualitative result of the blood sample, and cannot output a quantitative result of the blood sample.

US 2011/208536A1 relates to a blood analyzing system including a sample inserting device, a sample transporting device, a sample accommodating device, a blood cell analyzer, a smear creating device, a blood cell image display device, and a system control device. When receiving a measurement order, the system control device determines the transporting destination based on the measurement order and transmits instruction data to the sample transporting device so as to transport the sample rack to the transporting destination. The instruction data is contained in the measurement order, and such measurement order is transmitted to the blood cell analyzer of the transporting destination. The sample rack is transported to the blood cell analyzer of the transporting destination by the sample transporting device, and the sample is measured according to the measurement order by the blood cell analyzer. After the measurement is finished, the measurement result is transmitted from the blood cell analyzer to the clinical test information managing server. The clinical test information managing server determines whether a re-measurement is necessary by analyzing the measurement result of the sample obtained by the blood cell analyzer 5.

US 2010/248374A1 relates to a sample testing system provided with a sample putting apparatus, a sample transport apparatus, a sample transport apparatus, a sample accommodating apparatus, a sample testing apparatus, a smear slide preparing apparatus, and a system control apparatus. In the sample testing system, the testing apparatus carries out a first test (first-round test) on a sample which is transported by the transport apparatus, and then transports the sample rack in a predetermined first transport direction so as not to exceed a predetermined position of the transport apparatus until the determination of necessity for a second test (retest) is carried out. When it is determined that the retest is necessary, the sample testing system transports the sample in a second transport direction opposite to the first transport direction in order to perform the retest of the sample by the testing apparatus.

In the relevant technical solution, whether a retest is necessary is determined by test results obtained from hematology analyzer.

### SUMMARY

The invention is defined by a sample analysis system according to claim 1 and a corresponding sample analysis method according to claim 11. Further aspects of the invention are defined in the dependent claims.

### BRIEF DESCRIPTION OF THE DRAWINGS

FIG. 1 is a schematic block diagram of a structure of a sample analysis system according to an embodiment of the disclosure;
FIG. 2 is an exemplary schematic diagram showing a sample image of a blood sample containing microcytes;
FIGS. 3A and 3B are schematic diagrams showing initial test results when the sample shown in FIG. 2 is tested by a sample analysis system according to an embodiment of the disclosure;
FIGS. 4A and 4B are schematic diagrams showing retest results after the sample shown in FIG. 2 is tested by a sample analysis system according to an embodiment of the disclosure;
FIG. 5 is an exemplary schematic diagram showing a sample image of a blood sample containing erythrocyte fragments;
FIGS. 6A and 6B are schematic diagrams showing initial test results when the sample shown in FIG. 5 is tested by a sample analysis system according to an embodiment of the disclosure;
FIGS. 7A and 7B are schematic diagrams showing retest results after the sample shown in FIG. 5 is tested by a sample analysis system according to an embodiment of the disclosure;
FIG. 8 is an exemplary schematic diagram showing a sample image of a blood sample containing large platelets;
FIGS. 9A and 9B are schematic diagrams showing initial test results when the sample shown in FIG. 8 is tested by a sample analysis system according to an embodiment of the disclosure;
FIGS. 10A and 10B are schematic diagrams showing retest results after the sample shown in FIG. 8 is tested by a sample analysis system according to an embodiment of the disclosure;
FIG. 11 is a schematic block diagram of a structure of a sample analysis system according to another embodiment of the disclosure;
FIG. 12 is a schematic flowchart of a sample analysis method according to an embodiment of the disclosure;
FIG. 13 is a schematic flowchart of a sample analysis method according to another embodiment of the disclosure;
FIG. 14 is a schematic block diagram of a structure of a sample image analysis system according to an embodiment of the disclosure; and
FIG. 15 is a schematic block diagram of a structure of a hematology analyzer according to an embodiment of the disclosure.

### DESCRIPTION OF THE PREFERRED EMBODIMENTS

In order to make the objectives, technical solutions, and advantages of the disclosure more obvious, example embodiments according to the disclosure will be described in detail below with reference to the accompanying drawings. Apparently, the described embodiments are merely some rather than all of the embodiments of the disclosure. It should be understood that the exemplary embodiments described herein do not constitute any limitation to the disclosure. All other embodiments derived by those skilled in the art without creative efforts on the basis of the embodiments of the disclosure described in the disclosure shall fall within the scope of protection of the disclosure.

In the following description, a large number of specific details are given to provide a more thorough understanding of the disclosure. However, it is obvious to those skilled in the art that the disclosure can be implemented without one or more of these details. In other examples, to avoid confusion with the disclosure, some technical features known in the art are not described.

It should be understood that the disclosure can be implemented in different forms and should not be construed as being limited to the embodiments presented herein. On the contrary, these embodiments are provided to achieve thorough and complete disclosure and fully pass the scope of the disclosure to those skilled in the art.

The terms used herein are only intended to describe the specific embodiments and do not constitute a limitation to the disclosure. As used herein, the singular forms of "a", "an", and "the/this" are also intended to include plural forms, unless the context clearly indicates otherwise. It should also be appreciated that the terms "composed of" and/or "including", when used in the description, determine the existence of described features, integers, steps, operations, elements, and/or components, but do not exclude the existence or addition of one or more other features, integers, steps, operations, elements, components, and/or groups thereof. As used herein, the term "and/or" includes any and all combinations of relevant listed items.

For a thorough understanding of the disclosure, detailed steps and detailed structures will be provided in the following description to explain the technical solutions proposed by the disclosure. The preferred embodiments of the disclosure are described in detail as follows. However, in addition to these detailed descriptions, the disclosure may further have other implementations.

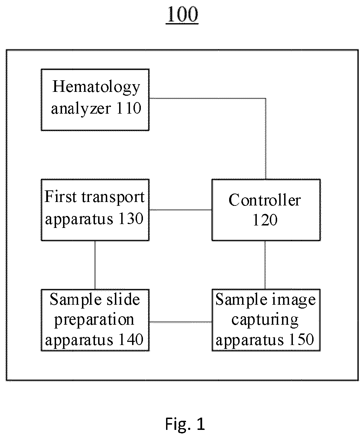

First, a sample analysis system according to an embodiment of the disclosure is described with reference to FIG. 1. FIG. 1 is a schematic flowchart of a sample analysis system 100 according to an embodiment of the disclosure. As shown in FIG. 1, the sample analysis system 100 includes one or more hematology analyzers 110, a controller 120, a first transport apparatus 130, a sample slide preparation apparatus 140, and a sample image capturing apparatus 150. One of the hematology analyzers 110 is configured to analyze a first test blood sample of a subject to obtain a sample analysis result (for example, a blood routine test result). The controller 120 is configured to control the first transport apparatus 130 to transport the first test blood sample to the sample slide preparation apparatus 140, when the sample analysis result satisfies a preset condition. The sample slide preparation apparatus 140 is configured to prepare a sample slide of the first test blood sample. The sample image capturing apparatus 150 is configured to capture a sample image of a sample region on the sample slide. The controller 120 is further configured to generate a retest instruction and send the retest instruction to one of the hematology analyzers 110, so that said hematology analyzer retests a second test blood sample of the subject, when the sample image contains information indicating that the first test blood sample is an abnormal sample.

Herein, said hematology analyzer configured for the retest (that is, analyzing the second test blood sample) and the hematology analyzer configured for the initial test (that is, analyzing the first test blood sample) may be a same hematology analyzer or different hematology analyzers. In addition, both the second test blood sample and the first test blood sample are blood samples of the same subject, and may be from a same sample container or different sample containers.

In this embodiment of the disclosure, the sample image of the blood sample that satisfies the preset condition (for example, an output result of the hematology analyzer being abnormal) is captured by the sample image capturing apparatus 150 (for example, the sample slide is transported by a second transport apparatus or manually from the sample slide preparation apparatus 140 to the sample image capturing apparatus 150 so as to capture the sample image), and when the sample image contains information indicating that the blood sample is an abnormal sample (wherein the sample image may be analyzed by the sample image capturing apparatus 150 or by the controller 120 or manually, so as to determine whether the sample image contains information indicating that the blood sample is an abnormal sample), a hematology analyzer 110 is triggered to retest a blood sample of the same subject (wherein the blood sample to be retested may be transported by a third transport apparatus or manually to said hematology analyzer). Therefore, according to the sample analysis system 100 in this embodiment of the disclosure, the operation of said hematology analyzer can be controlled based on the sample image, and because the sample image of the abnormal sample contains abnormal sample information, said hematology analyzer can be controlled to perform a specific retest or test operation based on the abnormal sample information, and a more accurate test result can thus be obtained.

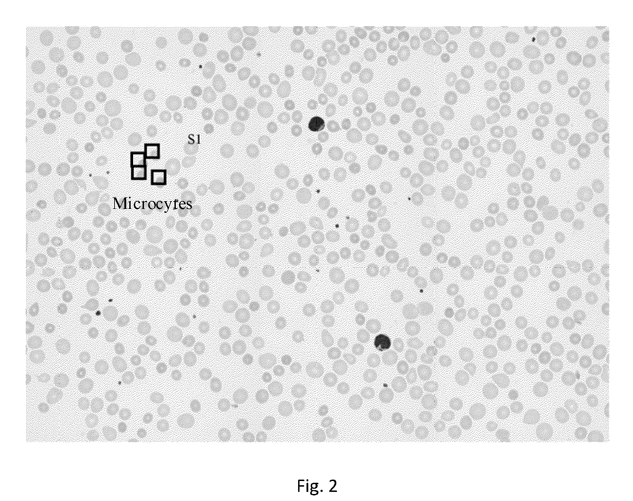

Specifically, the controller 120 may be further configured to: determine an abnormality type of the first test blood sample based on the sample image, and generate the retest instruction based on the abnormality type, wherein the retest instruction includes an instruction that causes said hematology analyzer to perform the retest under a test condition corresponding to the abnormality type of the blood sample. In this embodiment, said hematology analyzer performs the retest under the test condition corresponding to the abnormality type of the blood sample, and can implement the retest in a targeted manner, thereby outputting a more accurate test result. Generally, the hematology analyzer analyzes the first test blood sample under a first test condition, and retests the second test blood sample under a second test condition, wherein the second test condition is different from the first test condition. In other words, the test conditions under which the hematology analyzer performs the initial test and the retest on the blood samples of the same subject may be different, the test condition for the retest depends on the abnormality type of the corresponding blood sample, and thus whether the blood sample of the subject is abnormal and a specific test result (for example, a quantitative numerical result) can certainly be determined based on the retest result. The following description is given in conjunction with specific examples with reference to FIGS. 2 to 10B.

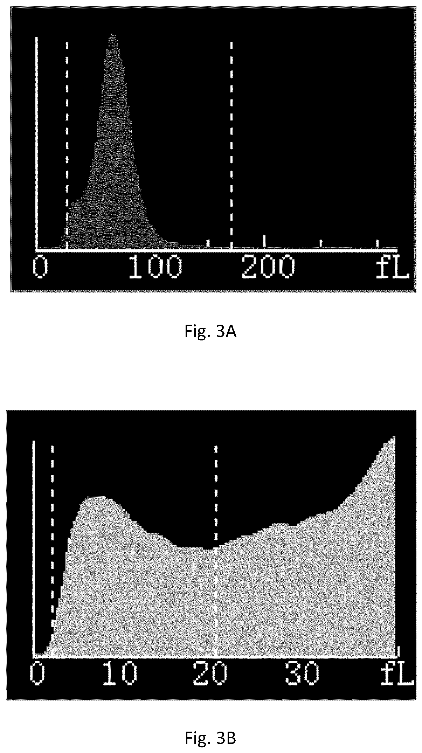

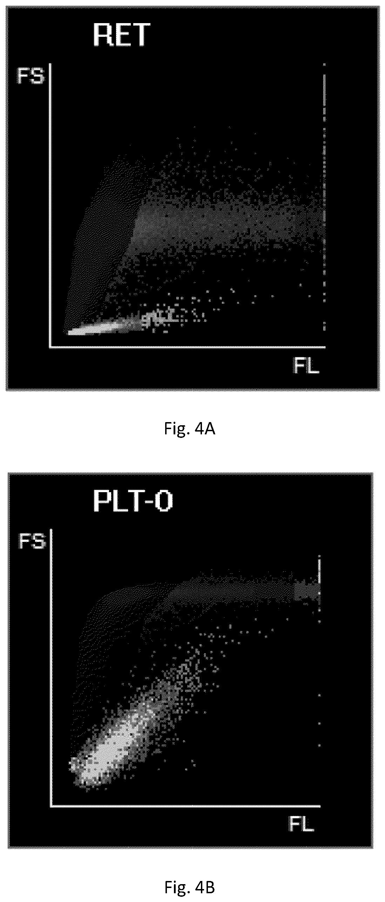

FIG. 2 is an exemplary schematic diagram showing a sample image of a blood sample containing microcytes. In this embodiment of the disclosure, when an image of the blood sample captured by the sample image capturing apparatus 150 of the sample analysis system 100 is as shown in FIG. 2, it can be determined that the first test blood sample contains microcytes. On this basis, the controller 120 may be further configured to generate the retest instruction that causes said hematology analyzer 110 to analyze the second test blood sample by using an optical method (the analysis herein may be referred to as platelet analysis, and because a platelet count value is high due to microcytes that may be mistaken for platelets, the platelets are retested by using the optical method). In an example, retest results are shown as particle scattergrams in FIG. 4A and FIG. 4B, wherein FIG. 4A is the scattergram of reticulocytes, and FIG. 4B is the scattergram of platelets. According to retest results of an optical channel of said hematology analyzer 110, a platelet test result of the blood sample of the subject is normal, while initial test results, such as initial test results of an impedance channel in FIG. 3A and FIG. 3B show a high platelet count. Therefore, in this embodiment, the hematology analyzer 110 analyzes the first test blood sample by using the impedance channel (that is, the first test condition), and retests the second test blood sample by using the optical channel (that is, the second test condition), wherein the platelet test result is corrected by the retest, and an accurate platelet count result can be obtained.

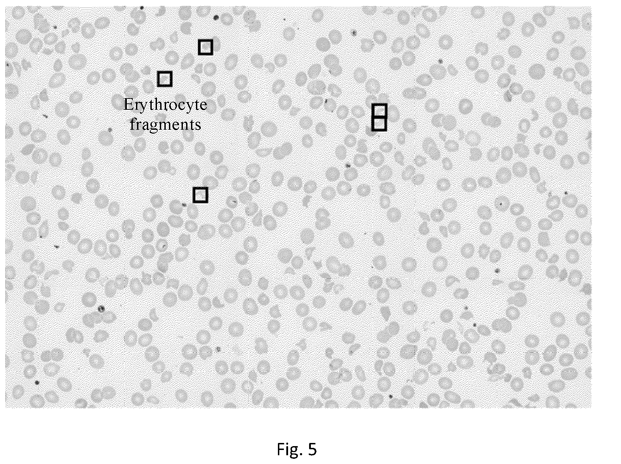

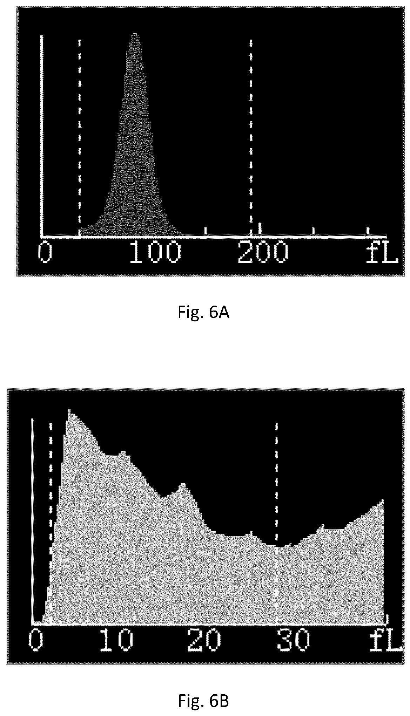

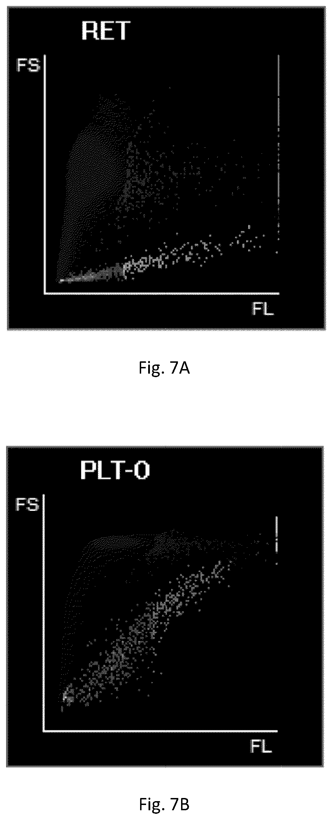

FIG. 5 is an exemplary schematic diagram showing a sample image of a blood sample containing erythrocyte fragments. In this embodiment of the disclosure, when an image of the blood sample captured by the sample image capturing apparatus 150 of the sample analysis system 100 is as shown in FIG. 5, it can be determined that the first test blood sample contains erythrocyte fragments. Based on this, the controller 120 may be further configured to generate the retest instruction that causes said hematology analyzer 110 to analyze the second test blood sample, by using an optical method (the analysis herein may be referred to as platelet analysis, and because a platelet count value is high due to erythrocyte fragments that may be mistaken for platelets, the platelets are retested by using the optical method). In an example, retest results are shown as particle scattergrams in FIG. 7A and FIG. 7B, wherein FIG. 7A is the scattergram of reticulocytes, and FIG. 7B is the scattergram of platelets. According to a retest result of the optical channel of said hematology analyzer 110, a platelet test result of the blood sample of the subject is normal, while initial test results, such as initial test results of the impedance channel in FIG. 6A and FIG. 6B show a high platelet count. Therefore, in this embodiment, the hematology analyzer 110 analyzes the first test blood sample by using the impedance channel (that is, the first test condition), and retests the second test blood sample by using the optical channel (that is, the second test condition), wherein the platelet test result is corrected by the retest, and an accurate platelet count result can be obtained.

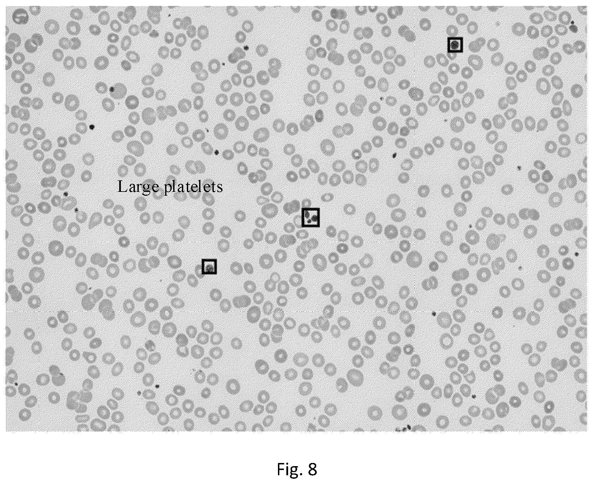

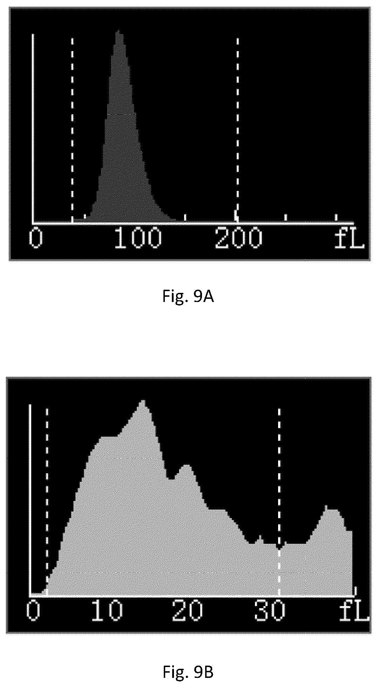

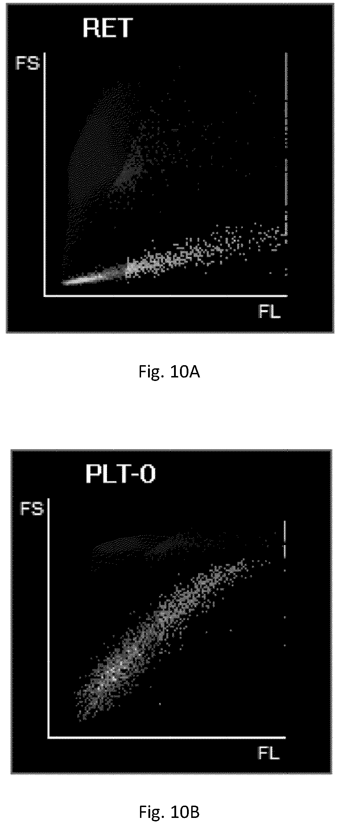

FIG. 8 is an exemplary schematic diagram showing a sample image of a blood sample containing large platelets. In this embodiment of the disclosure, when an image of the blood sample captured by the sample image capturing apparatus 150 of the sample analysis system 100 is as shown in FIG. 8, it can be determined that the first test blood sample contains large platelets. Based on this, the controller 120 may be further configured to generate the retest instruction that causes said hematology analyzer 110 to analyze the second test blood sample by using the optical method (the analysis herein may be referred to as platelet analysis, and because a platelet count value is low due to large platelets that may be mistaken for erythrocytes, the platelets are retested by using the optical method). In an example, retest results are shown as particle scattergrams in FIG. 10A and FIG. 10B, wherein FIG. 10A is the scattergram of reticulocytes, and FIG. 10B is the scattergram of platelets. According to a retest result of the optical channel of said hematology analyzer 110, a platelet test result of the blood sample of the subject is normal, while initial test results, such as initial test results of the impedance channel in FIG. 9A and FIG. 9B show a low platelet count. Therefore, in this embodiment, the hematology analyzer 110 analyzes the first test blood sample by using the impedance channel (that is, the first test condition), and retests the second test blood sample by using the optical channel (that is, the second test condition), wherein the platelet test result is corrected by the retest, and an accurate platelet count result can be obtained.

In another embodiment, the controller 120 may be further configured to generate the retest instruction that causes said hematology analyzer 110 to analyze the second test blood sample by using an optical method, when it is determined, based on the sample image, that the first test blood sample is at least one of a sample having a low platelet value, a sample having platelet aggregation, and a sample having leukocyte fragments. This embodiment is similar to the examples described above with reference to FIGS. 2 to 10B, the initial test results may be inaccurate due to interference caused by various reasons, and the retest results may correct the initial test results.

In still another embodiment, the controller 120 may be further configured to generate the retest instruction that causes said hematology analyzer 110 to treat the second test blood sample with a platelet disaggregation reagent, when it is determined, based on the sample image, that the first test blood sample is a sample having a low platelet value or a sample having platelet aggregation. The platelet disaggregation reagent is a reagent capable of inhibiting platelet aggregation. It is difficult to obtain an accurate platelet count result of the platelet aggregation sample due to platelet aggregation, and a low platelet count result may also be obtained for a sample having a low platelet value due to platelet aggregation. Therefore, in this embodiment, the second test blood sample may be treated with the platelet disaggregation reagent and then tested by using the optical method or the impedance method to obtain an accurate test result.

In still another embodiment, the controller 120 may be further configured to generate the retest instruction that causes said hematology analyzer 110 to analyze erythrocytes in the second test blood sample by using an optical method, when it is determined, based on the sample image, that the first test blood sample is a sample having erythrocyte aggregation. When the blood sample is a sample having erythrocyte aggregation, it indicates that erythrocyte aggregation occurs in the blood sample, which will affect the counting accuracy of erythrocytes. Therefore, in this embodiment, the blood sample is retested by using the optical method that is not affected by the aggregation, so that an accurate erythrocyte count result can be obtained.

In still another embodiment, the controller 120 may be further configured to generate the retest instruction that causes the hematology analyzer 110 to analyze hemoglobin in the second test blood sample by using an optical method, when it is determined, based on the sample image, that the first test blood sample is a sample having a falsely elevated hemoglobin. When the blood sample is a sample having a falsely elevated hemoglobin, it indicates that there is chylous blood in the blood sample, which will affect the determination of a hemoglobin value. Therefore, in this embodiment, the blood sample is retested by using the optical method that is not affected by chylous blood, so that an accurate hemoglobin value can be obtained.

In still another embodiment, the controller 120 may be further configured to generate the retest instruction that causes said hematology analyzer 110 to count leukocytes in the second test blood sample by using a leukocyte differential channel, when it is determined, based on the sample image, that the first test blood sample is a sample having leukocyte aggregation. When the blood sample is a sample having leukocyte aggregation, it indicates that leukocyte aggregation occurs in the blood sample. In this case, the counting accuracy of leukocytes is affected if a complete blood count channel (CBC channel) that performs weak hemolysis on cells and is likely to cause leukocyte aggregation is used. Therefore, in this embodiment, the blood sample is retested by using a leukocyte differential channel (DIFF channel) that performs strong hemolysis on cells and is not affected by aggregation, so that an accurate leukocyte count result can be obtained.

In the above embodiments, if the initial test is performed by using the optical method (for example, both the impedance method and the optical method are used), and when it is determined that the first test blood sample is at least one of sample having a low platelet value, a sample having platelet aggregation, a sample having erythrocyte fragments, a sample having leukocyte fragments, a sample having microcytes, and a sample having large platelets, a sample having erythrocyte aggregation, a sample having a falsely elevated hemoglobin, and a sample having leukocyte aggregation, the retest instruction may be outputting the test result of the optical method.

The above shows examples in which the controller 120 determines the abnormality type of the first test blood sample based on the sample image, and generates, based on the abnormality type, the instruction that causes the hematology analyzer 110 to perform the retest under the test condition corresponding to the abnormality type of the blood sample.

In an embodiment of the disclosure, the controller 120 may be a central controller that may be further configured to: obtain the sample image from the sample image capturing apparatus 150, analyze the sample image, and generate the retest instruction and send the retest instruction to one hematology analyzer 110 (said hematology analyzer may be the hematology analyzer for performing the initial test or may be another one different from it), so that said hematology analyzer performs the retest, when it is determined, based on the analysis, that the sample image contains information indicating that the first test blood sample is an abnormal sample.

In another embodiment of the disclosure, the controller 120 may be integrated into the sample image capturing apparatus 150, and the controller 120 may be further configured to: obtain the sample image, analyze the sample image, and generate the retest instruction and send the retest instruction to one hematology analyzer 110 (said hematology analyzer may be the hematology analyzer for performing the initial test or may be another one different from it), so that said hematology analyzer performs the retest, when it is determined, based on the analysis, that the sample image contains information indicating that the first test blood sample is an abnormal sample.

In still another embodiment of the disclosure, the controller 120 may be integrated into one hematology analyzer 110 (said hematology analyzer may be the hematology analyzer for performing the initial test or may be another one different from it), and the controller 120 may be further configured to: obtain the sample image from the sample image capturing apparatus 150, analyze the sample image, and generate the retest instruction to control said hematology analyzer 110 (said hematology analyzer may be the hematology analyzer for performing the initial test or may be another one different from it) to perform the retest, when it is determined, based on the analysis, that the sample image contains information indicating that the first test blood sample is an abnormal sample.

In yet another embodiment of the disclosure, the controller 120 may be integrated into the sample slide preparation apparatus 140, and the controller 120 may be further configured to: obtain the sample image, analyze the sample image, and generate the retest instruction and send the retest instruction to the hematology analyzer 110 (said hematology analyzer may be the hematology analyzer for performing the initial test or may be another one different from it), so that said hematology analyzer performs the retest, when it is determined, based on the analysis, that the sample image contains information indicating that the first test blood sample is an abnormal sample.

In this embodiment of the disclosure, the controller 120 may include at least: a processing component, a random access memory (RAM), a read-only memory (ROM), a communication interface, a memory, and an output/input (I/O) interface, wherein the processing component, the RAM, the ROM, the communication interface, the memory, and the I/O interface communicate through a bus. The processing component may be a central processing unit (CPU), a graphics processing unit (GPU), or other chips with computing capabilities. An operating system, and various computer programs such as an application program executable by the processing component, and data required for execution of the computer programs are stored in the memory. In addition, in the process of sample testing, any data that needs to be stored locally may be stored in the memory. The I/O interface is composed of a serial interface such as a USB, IEEE1394 or RS-232C, a parallel interface such as an SCSI, IDE or IEEE1284, and an analog signal interface composed of a D/A converter, A/D converter, and the like. An input device composed of a keyboard, a mouse, a touchscreen, or other control buttons is connected to the I/O interface, and a user may directly input data to a control device by using the input apparatus. In addition, the I/O interface may be further connected to a display with a display function, for example: a liquid crystal display, a touchscreen, an LED display, etc., and the control device may output the processed data as image display data to the display for displaying, for example, analysis data and an instrument operating parameter. The communication interface may be an interface which supports any currently known communication protocol. The communication interface communicates with the outside over a network. The controller 120 may transmit data with any device connected over the network through the communication interface and based on a communication protocol.

The sample analysis system 100 according to an embodiment of the disclosure is exemplarily described above. Based on the above description, according to the sample analysis system 100 in this the embodiment of the disclosure, the hematology analyzer first performs the initial test on the blood sample of the subject, the sample image capturing apparatus captures the sample image when the initial test result satisfies the preset condition, and generates the retest instruction when the sample image contains information indicating that the sample is an abnormal sample, such that the hematology analyzer retests the blood sample of the subject according to the instruction. In this way, the operation of the hematology analyzer can be controlled based on the sample image and because the sample image of the abnormal sample contains abnormal sample information, the hematology analyzer can be controlled to perform a specific retest operation based on the abnormal sample information, and a more accurate test result can thus be obtained.

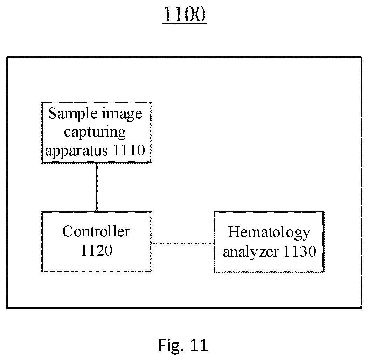

A sample analysis system according to another embodiment of the disclosure will be described below with reference to FIG. 11. FIG. 11 is a schematic flowchart of a sample analysis system 1100 according to another embodiment of the disclosure. As shown in FIG. 11, the sample analysis system 1100 includes a sample image capturing apparatus 1110, a controller 1120, and a hematology analyzer 1130. The sample image capturing apparatus 1110 is configured to capture a sample image of a sample region on a sample slide, the sample slide being prepared from a first test blood sample of a subject. The controller 1120 is configured to generate a test instruction and send the test instruction to the hematology analyzer 1130, so that the hematology analyzer 1130 analyzes a second test blood sample of the subject, when the sample image contains information indicating that the first test blood sample is an abnormal sample. The hematology analyzer 1130 is configured to analyze the second test blood sample, so as to obtain a sample analysis result.

The sample analysis system 1100 according to this embodiment of the disclosure is similar to the sample analysis system 100 according to the embodiment of the disclosure described above in that the operation of the hematology analyzer is controlled based on the sample image, and a difference therebetween lies in that, according to the sample analysis system 100 in the embodiment of the disclosure described above, a hematology analyzer performs an initial test on the blood sample before the operation of the hematology analyzer is controlled based on the sample image, while according to the sample analysis system 1100 in this embodiment of the disclosure, the hematology analyzer is controlled to perform an initial test directly based on the sample image. Therefore, according to the sample analysis system 1100 in this embodiment of the disclosure, the test instruction is generated when the sample image of the blood sample contains information indicating that the sample is an abnormal sample, such that the hematology analyzer tests the blood sample of the subject according to the instruction. In this way, the operation of the hematology analyzer can be controlled based on the sample image; and because the sample image of the abnormal sample contains abnormal sample information, the hematology analyzer can be controlled to perform a specific test operation based on the abnormal sample information, and an accurate test result can thus be obtained.

Similar to the controller 120 in the sample analysis system 100, in an embodiment, the controller 1120 in the sample analysis system 1100 may be further configured to: determine an abnormality type of the first test blood sample based on the sample image, and generate the test instruction based on the abnormality type, wherein the test instruction includes an instruction that causes the hematology analyzer 1130 to perform analysis under a test condition corresponding to the abnormality type. In this embodiment, the hematology analyzer performs the test under the test condition corresponding to the abnormality type of the blood sample, and can implement the test in a targeted manner, thereby outputting an accurate test result.

Similar to the controller 120 in the sample analysis system 100, in an embodiment, the controller 1120 in the sample analysis system 1100 may be further configured to generate the instruction that causes the hematology analyzer 1130 to analyze the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets.

Similar to the controller 120 in the sample analysis system 100, in another embodiment, the controller 1120 in the sample analysis system 1100 may be further configured to generate the instruction that causes the hematology analyzer 1130 to treat the second test blood sample with a platelet disaggregation reagent, when it is determined, based on the sample image, that the first test blood sample is a sample having a low platelet value or a sample having platelet aggregation.

Similar to the controller 120 in the sample analysis system 100, in still another embodiment, the controller 1120 in the sample analysis system 1100 may be further configured to generate the instruction that causes the hematology analyzer 1130 to analyze erythrocytes in the second test blood sample by using an optical method, when it is determined, based on the sample image, that the first test blood sample is a sample having erythrocyte aggregation; generate the instruction that causes the hematology analyzer 1130 to analyze hemoglobin in the second test blood sample by using an optical method, when it is determined, based on the sample image, that the first test blood sample is a sample having a falsely elevated hemoglobin; and generate the instruction that causes the hematology analyzer 1130 to count leukocytes in the second test blood sample by using a leukocyte differential channel, when it is determined, based on the sample image, that the first test blood sample is a sample having leukocyte aggregation.

Similar to the controller 120 in the sample analysis system 100, in an embodiment, the controller 1120 in the sample analysis system 1100 may be a central controller that may be further configured to: obtain the sample image from the sample image capturing apparatus 1110, analyze the sample image, and generate the test instruction and send the test instruction to the hematology analyzer 1130, so that the hematology analyzer 1130 performs the analysis, when it is determined, based on the analysis, that the sample image contains information indicating that the first test blood sample is an abnormal sample. In another embodiment, the controller 1120 may be integrated into the sample image capturing apparatus 1110, and the controller 1120 is further configured to: obtain the sample image, analyze the sample image, and generate the test instruction and send the test instruction to the hematology analyzer 1130, so that the hematology analyzer 1130 performs the analysis, when it is determined, based on the analysis, that the sample image contains information indicating that the first test blood sample is an abnormal sample. In still another embodiment, the controller 1120 may be integrated into the hematology analyzer 1130, and the controller 1120 may be further configured to: obtain the sample image from the sample image capturing apparatus 1110, analyze the sample image, and generate the test instruction to control the hematology analyzer 1130 to perform the analysis, when it is determined, based on the analysis, that the sample image contains information indicating that the first test blood sample is an abnormal sample.

The above shows the sample analysis system 1100 according to this embodiment of the disclosure. Based on the above description, according to the sample analysis system 1100 in this embodiment of the disclosure, the test instruction is generated when the sample image of the blood sample contains information indicating that the sample is an abnormal sample, such that the hematology analyzer tests the blood sample of the same subject according to the instruction. In this way, the operation of the hematology analyzer can be controlled based on the sample image; and because the sample image of the abnormal sample contains abnormal sample information, the hematology analyzer can be controlled to perform a specific test operation based on the abnormal sample information, and an accurate test result can thus be obtained.

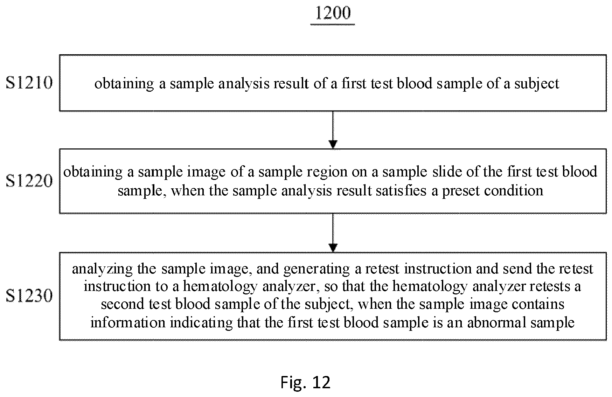

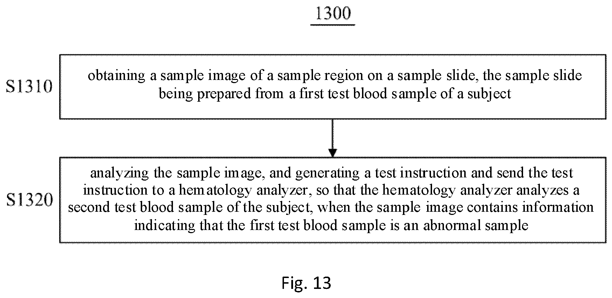

According to another aspect of the disclosure, a sample analysis method is further provided. The sample analysis method may be performed by the sample analysis system 100 or the sample analysis system 1100 described above and will be described below with reference to FIGS. 12 and 13.

FIG. 12 is a schematic flowchart of a sample analysis method 1200 according to an embodiment of the disclosure. As shown in FIG. 12, the sample analysis method 1200 may include the following steps:
S1210: obtaining a sample analysis result of a first test blood sample of a subject;
S1220: obtaining a sample image of a sample region on a sample slide of the first test blood sample, when the sample analysis result satisfies a preset condition; and
S1230: analyzing the sample image, and generating a retest instruction and sending the retest instruction to a hematology analyzer, so that the hematology analyzer retests a second test blood sample of the subject, when the sample image contains information indicating that the first test blood sample is an abnormal sample.

The sample analysis method 1200 according to this embodiment of the disclosure may be performed by the sample analysis system 100 according to the embodiment of the disclosure described above. Those skilled in the art can understand the detailed process of the sample analysis method 1200 according to this embodiment of the disclosure in conjunction with the above description, and for ease of brevity, only some main operations will be described herein, and details will not be repeated.

In an embodiment of the disclosure, the method 1200 may further include the following steps (not shown): determining an abnormality type of the first test blood sample based on the sample image, and generating the retest instruction based on the abnormality type, wherein the retest instruction includes an instruction that causes the hematology analyzer to perform a retest under a test condition corresponding to the abnormality type.

In an embodiment of the disclosure, generating a retest instruction based on the abnormality type may include: generating the retest instruction that causes the hematology analyzer to analyze the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets; and/or generating the retest instruction that causes the hematology analyzer to treat the second test blood sample with a platelet disaggregation reagent, when it is determined, based on the sample image, that the first test blood sample is a sample having a low platelet value or a sample having platelet aggregation.

In an embodiment of the disclosure, generating a retest instruction based on the abnormality type may include at least one of the following: generating the retest instruction that causes the hematology analyzer to analyze erythrocytes in the second test blood sample by using an optical method, when it is determined, based on the sample image, that the first test blood sample is a sample having erythrocyte aggregation; generating the retest instruction that causes the hematology analyzer to analyze hemoglobin in the second test blood sample by using an optical method, when it is determined, based on the sample image, that the first test blood sample is a sample having a falsely elevated hemoglobin; and generating the retest instruction that causes the hematology analyzer to count leukocytes in the second test blood sample by using a leukocyte differential channel, when it is determined, based on the sample image, that the first test blood sample is a sample having leukocyte aggregation.

In an embodiment of the disclosure, the analysis on the first test blood sample is performed under a first test condition, the retest on the second test blood sample is performed under a second test condition corresponding to the retest instruction, and the second test condition is different from the first test condition.

According to the sample analysis method 1200 in this embodiment of the disclosure, an initial test result of the blood sample of the subject is first obtained, the sample image of the blood sample is captured when the initial test result satisfies the preset condition, and the retest instruction is generated when the sample image contains information indicating that the sample is an abnormal sample, such that the hematology analyzer retests the blood sample of the same subject according to the instruction. In this way, the operation of the hematology analyzer can be controlled based on the sample image; and because the sample image of the abnormal sample contains abnormal sample information, the hematology analyzer can be controlled to perform a specific retest operation based on the abnormal sample information, and a more accurate test result can thus be obtained.

FIG. 13 is a schematic flowchart of a sample analysis method 1300 according to another embodiment of the disclosure. As shown in FIG. 13, the sample analysis method 1300 may include the following steps:
S1310: obtaining a sample image of a sample region on a sample slide, the sample slide being prepared from a first test blood sample of a subject; and
S1320: analyzing the sample image, and generating a test instruction and sending the test instruction to a hematology analyzer, so that the hematology analyzer analyzes a second test blood sample of the subject, when the sample image contains information indicating that the first test blood sample is an abnormal sample.

The sample analysis method 1300 according to this embodiment of the disclosure may be performed by the sample analysis system 1100 according to the embodiment of the disclosure described above. Those skilled in the art can understand the detailed process of the sample analysis method 1300 according to this embodiment of the disclosure in conjunction with the above description, and for ease of brevity, only some main operations will be described herein, and details will not be repeated.

In an embodiment of the disclosure, the method 1300 may further include the following steps (not shown): determining an abnormality type of the first test blood sample based on the sample image, and generating the test instruction based on the abnormality type, wherein the test instruction includes an instruction that causes the hematology analyzer to perform analysis under a test condition corresponding to the abnormality type.

In an embodiment of the disclosure, generating a test instruction based on the abnormality type may further include: generating the instruction that causes the hematology analyzer to analyze the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets; and/or generating the instruction that causes the hematology analyzer to treat the second test blood sample with a platelet disaggregation reagent, when it is determined, based on the sample image, that the first test blood sample is a sample having a low platelet value or a sample having platelet aggregation.

In an embodiment of the disclosure, generating a test instruction based on the abnormality type may further include at least one of the following: generating the instruction that causes the hematology analyzer to analyze erythrocytes in the second test blood sample by using an optical method, when it is determined, based on the sample image, that the first test blood sample is a sample having erythrocyte aggregation; generating the instruction that causes the hematology analyzer to analyze hemoglobin in the second test blood sample by using an optical method, when it is determined, based on the sample image, that the first test blood sample is a sample having a falsely elevated hemoglobin; and generating the test instruction that causes the hematology analyzer to count leukocytes in the second test blood sample by using a leukocyte differential channel, when it is determined, based on the sample image, that the first test blood sample is a sample having leukocyte aggregation.

According to the sample analysis method 1300 in this embodiment of the disclosure, the test instruction is generated when the sample image of the blood sample contains information indicating that the sample is an abnormal sample, such that the hematology analyzer tests the blood sample of the same subject according to the instruction. In this way, the operation of the hematology analyzer can be controlled based on the sample image; and because the sample image of the abnormal sample contains abnormal sample information, the hematology analyzer can be controlled to perform a specific test operation based on the abnormal sample information, and an accurate test result can thus be obtained.

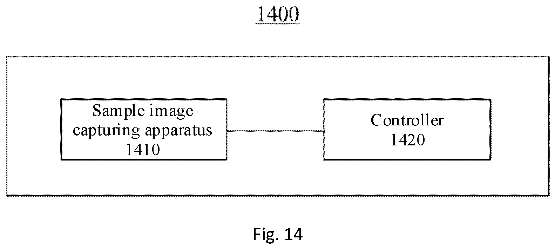

According to still another aspect of the disclosure, a sample image analysis system is further provided. The sample image analysis system may implement the functions of the sample image capturing apparatus and the controller in each of the sample analysis systems 100 and 1100 according to the above embodiments, and will be described below with reference to FIG. 14.

FIG. 14 is a schematic block diagram of a structure of a sample image analysis system 1400 according to an embodiment of the disclosure. As shown in FIG. 14, the sample image analysis system 1400 may include a sample image capturing apparatus 1410 and a controller 1420, wherein the sample image capturing apparatus 1410 is configured to capture a sample image of a sample region on a sample slide prepared from a first test blood sample of a subject; and the controller 1420 is configured to analyze the sample image, and generate an instruction that causes a hematology analyzer to test a second test blood sample of the subject, when it is determined, based on the cell image, that the first test blood sample is an abnormal sample.

Similar to the controller 120 in the sample analysis system 100, in an embodiment, the controller 1420 in the sample image analysis system 1400 may be further configured to: determine an abnormality type of the first test blood sample based on the sample image, and generate a test instruction based on the abnormality type, wherein the test instruction includes an instruction that causes the hematology analyzer to perform analysis under a test condition corresponding to the abnormality type.

Similar to the controller 120 in the sample analysis system 100, in an embodiment, the controller 1420 in the sample image analysis system 1400 may be further configured to: generate the instruction that causes the hematology analyzer to analyze the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets; and/or generate the instruction that causes the hematology analyzer to treat the second test blood sample with a platelet disaggregation reagent, when it is determined, based on the sample image, that the first test blood sample is a sample having a low platelet value or a sample having platelet aggregation.

Similar to the controller 120 in the sample analysis system 100, in an embodiment, the controller 1420 in the sample image analysis system 1400 may be further configured to perform at least one of the following: generating the instruction that causes the hematology analyzer to analyze erythrocytes in the second test blood sample by using an optical method, when it is determined, based on the sample image, that the first test blood sample is a sample having erythrocyte aggregation; generating the instruction that causes the hematology analyzer to analyze hemoglobin in the second test blood sample by using an optical method, when it is determined, based on the sample image, that the first test blood sample is a sample having falsely elevated hemoglobin; and generating the instruction that causes the hematology analyzer to count leukocytes in the second test blood sample by using a leukocyte differential channel, when it is determined, based on the sample image, that the first test blood sample is a sample having leukocyte aggregation.

According to the sample image analysis system 1400 in this embodiment of the disclosure, the test instruction is generated when the sample image of the blood sample contains information indicating that the sample is an abnormal sample, such that the hematology analyzer tests the blood sample of the same subject according to the instruction. In this way, the operation of the hematology analyzer can be controlled based on the sample image; and because the sample image of the abnormal sample contains abnormal sample information, the hematology analyzer can be controlled to perform a specific test operation based on the abnormal sample information, and an accurate test result can thus be obtained.

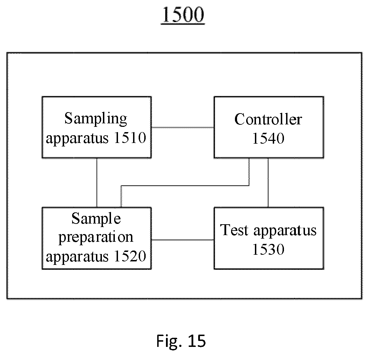

According to yet another aspect of the disclosure, a hematology analyzer is further provided. The hematology analyzer may implement the functions of the hematology analyzer in the sample analysis system 100 according to the above embodiment, and will be described below with reference to FIG. 15.

FIG. 15 is a schematic block diagram of a structure of a hematology analyzer 1500 according to an embodiment of the disclosure. As shown in FIG. 15, the hematology analyzer 1500 may include a sampling apparatus 1510, a sample preparation apparatus 1520, a test apparatus 1530, and a controller 1540, wherein the controller 1540 is configured to receive retest information associated with a sample slide that is sent by a sample image capturing apparatus or an instrument communicatively connected to the sample image capturing apparatus, and control the sampling apparatus 1510, the sample preparation apparatus 1520, and the test apparatus 1530 to analyze a second test blood sample of a subject based on the received retest information, the sample slide being prepared from a first test blood sample of the subject; the sampling apparatus 1510 is configured to sample the second test blood sample from a sample container; the sample preparation apparatus 1520 is configured to mix the second test blood sample and a reagent to prepare a blood sample solution; and the test apparatus 1530 is configured to test the blood sample solution to obtain a blood routine test parameter.

In an embodiment of the disclosure, the retest information received by the controller 1540 may include a sample image obtained by capturing the sample slide by the sample image capturing apparatus. In this embodiment, the controller 1540 may be further configured to: determine an abnormality type of the first test blood sample based on the sample image, and generate a retest instruction based on the abnormality type, wherein the retest instruction includes an instruction that causes the sample preparation apparatus 1520 and the test apparatus 1530 to perform a retest under a test condition corresponding to the abnormality type.

In another embodiment of the disclosure, the retest information received by the controller 1540 may include a retest instruction generated based on the abnormality type of the first test blood sample, which is determined based on the sample image, wherein the sample image is obtained by capturing the sample slide by the sample image capturing apparatus; and the retest instruction may include an instruction that causes the sample preparation apparatus 1520 and the test apparatus 1530 to perform a retest under a test condition corresponding to the abnormality type. In this embodiment, the controller 1540 may directly control the sample preparation apparatus 1520 and the test apparatus 1530 to perform corresponding operations based on the received instruction.

In an embodiment of the disclosure, the retest instruction may include: the retest instruction being an instruction that causes the sample preparation apparatus 1520 and the test apparatus 1530 to analyze the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets; and/or the retest instruction being an instruction that causes the sample preparation apparatus 1520 to treat the second test blood sample with a platelet disaggregation reagent, and then the test apparatus 1530 to perform analysis, when it is determined, based on the sample image, that the first test blood sample is a sample having a low platelet value or a sample having platelet aggregation.

In another embodiment of the disclosure, the retest instruction may include at least one of the following: the retest instruction being an instruction that causes the sample preparation apparatus 1520 and the test apparatus 1530 to analyze erythrocytes in the second test blood sample by using an optical method, when it is determined, based on the sample image, that the first test blood sample is a sample having erythrocyte aggregation; the retest instruction being an instruction that causes the sample preparation apparatus 1520 and the test apparatus 1530 to analyze hemoglobin in the second test blood sample by using an optical method, when it is determined, based on the sample image, that the first test blood sample is a sample having a falsely elevated hemoglobin; and the retest instruction being an instruction that causes the sample preparation apparatus 1520 and the test apparatus 1530 to count leukocytes in the second test blood sample by using a leukocyte differential channel, when it is determined, based on the sample image, that the first test blood sample is a sample having leukocyte aggregation.

In this embodiment of the disclosure, the sampling apparatus 1510 has a pipette (for example, a sampling needle) with a pipette nozzle, and has a driving portion. The driving portion is configured to drive the pipette to quantitatively aspirate the test blood sample through the pipette nozzle. For example, the sampling needle moves under the driving of the driving portion to aspirate the test blood sample from a sample container containing the blood sample. The sample preparation apparatus 1520 has at least one reaction cell and a reagent supply apparatus. The at least one reaction cell is configured to receive the test blood sample that is aspirated by the sampling apparatus 1510, and the reagent supply apparatus supplies the treatment reagent to the at least one reaction cell, so that the test blood sample that is aspirated by the sampling apparatus 1510 is mixed with the treatment reagent supplied by the reagent supply apparatus in the reaction cell so as to prepare a sample solution to be tested. The test apparatus 1530 is configured to test the sample solution to be tested that is prepared by the sample preparation apparatus 1520, so as to obtain a blood routine test parameter.

According to the hematology analyzer 1500 in this embodiment of the disclosure, the operations of the sampling apparatus, the sample preparation apparatus, and the test apparatus included in the hematology analyzer are controlled based on the retest information (the sample image or the retest instruction generated after analyzing the sample image) associated with the sample slide and received from the sample image capturing apparatus or an instrument communicatively connected to the sample image capturing apparatus, so that the operation of the hematology analyzer is controlled based on the sample image; and because the sample image of the abnormal sample contains abnormal sample information, the hematology analyzer can be controlled to perform a specific test operation based on the abnormal sample information, and an accurate test result can thus be obtained.

Furthermore, according to the embodiments of the disclosure, a storage medium is further provided. The storage medium has program instructions stored therein, and the program instructions, when executed by a computer or processor, implement the corresponding steps of the sample analysis methods of the embodiments of the disclosure. The storage medium may include, for example, a memory card of a smart phone, a storage component of a tablet computer, a hard disk of a personal computer, a read-only memory (ROM), an erasable programmable read-only memory (EPROM), a portable compact disk read-only memory (CD-ROM), a USB memory, or any combination of the above storage media. The computer-readable storage medium may be any combination of one or more computer-readable storage media.

Furthermore, according to the embodiments of the disclosure, a computer program is further provided. The computer program may be stored in a cloud or a local storage medium. The computer program, when executed by a computer or processor, is used to implement the corresponding steps of the sample analysis methods according to the embodiments of the disclosure.

Based on the above description, according to the sample analysis system and method, the sample image analysis system, and the hematology analyzer of the embodiments of the disclosure, the retest or test instruction is generated when the sample image of the blood sample contains the information indicating that the sample is an abnormal sample, such that the hematology analyzer retests or tests the blood sample of the same subject according to the instruction. In this way, the operation of the hematology analyzer can be controlled based on the sample image; and because the sample image of the abnormal sample contains abnormal sample information, the hematology analyzer can be controlled to perform a specific retest or test operation based on the abnormal sample information, and a more accurate test result can thus be obtained.

Although the exemplary embodiments have been described here with reference to the accompanying drawings, it should be understood that the exemplary embodiments described above are merely exemplary, and are not intended to limit the scope of the disclosure thereto. Those of ordinary skill in the art may make various changes and modifications therein without departing from the scope of the disclosure as claimed in the appended claims.

Those of ordinary skill in the art would have appreciated that the units and algorithm steps of the examples described in conjunction with the embodiments disclosed herein may be implemented in electronic hardware or a combination of computer software and electronic hardware. Whether the functions are performed by hardware or software depends on particular applications and design constraint conditions of the technical solutions. Those skilled in the art could use different methods to implement the described functions for each particular application, but such implementation should not be considered to be beyond the scope of the disclosure.

In several embodiments provided in the disclosure, it should be understood that the disclosed apparatuses and methods may be implemented in other ways. For example, the apparatus embodiments described above are merely examples. For example, the division of units is only a logic function division. In actual implementation, there may be other division methods, for example, a plurality of units or components may be combined or integrated into another apparatus, or some features may be omitted or not implemented.

A large number of specific details are explained in this description provided herein. However, it could be understood that the embodiments of the disclosure can be practiced without these specific details. In some instances, well-known methods, structures, and technologies are not shown in detail, so as not to obscure the understanding of this description.

Various embodiments regarding components in the disclosure may be implemented in hardware, or implemented by software modules running on one or more processors, or implemented in a combination thereof. It should be understood for those skilled in the art that a microprocessor or a digital signal processor (DSP) may be used in practice to implement some or all of the functions of some modules according to this embodiment of the disclosure. The disclosure may further be implemented as a device program (e.g., a computer program and a computer program product) for executing some or all of the methods described herein. Such a program for implementing the disclosure may be stored on a computer-readable medium, or may be in the form of one or more signals. Such a signal may be downloaded from an Internet website, or provided on a carrier signal, or provided in any other form.

It should be noted that the description of the disclosure made in the above-mentioned embodiments is not to limit the disclosure, and those skilled in the art may design alternative embodiments without departing from the scope of the appended claims. In the claims, any reference signs placed between parentheses should not be construed as limitation on the claims. The disclosure may be implemented by means of hardware including several different elements and by means of an appropriately programmed computer. In unit claims listing several devices, several of these devices may be specifically embodied by one and the same item of hardware. The use of the terms "first", "second", "third", etc. does not indicate any order. These terms may be interpreted as names.

The above descriptions are merely the specific embodiments of the disclosure or the description of the specific embodiments, but the scope of protection of the disclosure is not limited thereto. Any changes or substitutions readily conceivable by those skilled in the art within the technical scope disclosed in the disclosure shall fall within the scope of protection of the disclosure. Therefore, the scope of protection of the disclosure should be subject to the scope of protection of the claims.

## Claims

1. A sample analysis system (100), comprising at least one hematology analyzer (110), a controller (120), a first transport apparatus (130), a sample slide preparation apparatus (140), and a sample image capturing apparatus (150), wherein
one of the at least one hematology analyzer is configured to perform an initial test on a first test blood sample of a subject, so as to analyze the first test blood sample and obtain a sample analysis result;
the controller (120) is configured to control the first transport apparatus (130) to transport the first test blood sample to the sample slide preparation apparatus (140), when the sample analysis result satisfies a preset condition which is that the output result of the haematology analyzer is abnormal;
the sample slide preparation apparatus (140) is configured to prepare a sample slide of the first test blood sample;
the sample image capturing apparatus (150) is configured to capture a sample image of a sample region on the sample slide;
**characterised in that**
the controller (120) is further configured to generate a retest instruction and send the retest instruction to one of the at least one hematology analyzer (110), so that said hematology analyzer (110) retests a second test blood sample of the subject, when the sample image contains information indicating that the first test blood sample is an abnormal sample.

2. The sample analysis system of claim 1, wherein the controller (120) is a central controller that is further configured to:
obtain the sample image from the sample image capturing apparatus (150),
analyze the sample image, and
generate the retest instruction and send the retest instruction to said hematology analyzer (110), so that said hematology analyzer performs the retest, when it is determined, based on the analysis, that the sample image contains information indicating that the first test blood sample is an abnormal sample.

3. The sample analysis system of claim 1, wherein the controller (120) is integrated into the sample image capturing apparatus (150), and the controller is further configured to:
obtain the sample image,
analyze the sample image, and
generate the retest instruction and send the retest instruction to said hematology analyzer, so that said hematology analyzer performs the retest, when it is determined, based on the analysis, that the sample image contains information indicating that the first test blood sample is an abnormal sample.

4. The sample analysis system of claim 1, wherein the controller (120) is integrated into said hematology analyzer (110) , and the controller (120) is further configured to:
obtain the sample image from the sample image capturing apparatus (150),
analyze the sample image, and
generate the retest instruction to control said hematology analyzer (110) to perform the retest, when it is determined, based on the analysis, that the sample image contains information indicating that the first test blood sample is an abnormal sample.

5. The sample analysis system of claim 1, wherein the controller (120) is integrated into the sample slide preparation apparatus (140), and the controller (120) is further configured to:
obtain the sample image,
analyze the sample image, and
generate the retest instruction and send the retest instruction to said hematology analyzer (110), so that said hematology analyzer performs the retest, when it is determined, based on the analysis, that the sample image contains information indicating that the first test blood sample is an abnormal sample.

6. The sample analysis system of any one of claims 1-5, wherein the controller (120) is further configured to:
determine an abnormality type of the first test blood sample based on the sample image, and generate the retest instruction based on the abnormality type, wherein the retest instruction comprises an instruction that causes said hematology analyzer to perform the retest under a test condition corresponding to the abnormality type.

7. The sample analysis system of claim 6, wherein the controller (120) is further configured to:
generate the retest instruction that causes said hematology analyzer (110) to analyze the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets; and/or
generate the retest instruction that causes said hematology analyzer (110) to treat the second test blood sample with a platelet disaggregation reagent, when it is determined, based on the sample image, that the first test blood sample is a sample having a low platelet value or a sample having platelet aggregation.

8. The sample analysis system of claim 6, wherein the controller (120) is further configured to perform at least one of the following:
generating the retest instruction that causes said hematology analyzer (110) to analyze erythrocytes in the second test blood sample by using an optical method, when it is determined, based on the sample image, that the first test blood sample is a sample having erythrocyte aggregation;
generating the retest instruction that causes said hematology analyzer (110) to analyze hemoglobin in the second test blood sample by using an optical method, when it is determined, based on the sample image, that the first test blood sample is a sample having falsely elevated hemoglobin; and
generating the retest instruction that causes said hematology analyzer (110) to count leukocytes in the second test blood sample by using a leukocyte differential channel, when it is determined, based on the sample image, that the first test blood sample is a sample having leukocyte aggregation.

9. The sample analysis system of any one of claims 6-8, wherein the hematology analyzer (110) is configured to analyze the first test blood sample under a first test condition; said hematology analyzer is further configured to retest the second test blood sample under a second test condition corresponding to the retest instruction, after receiving the retest instruction; wherein the second test condition is different from the first test condition, wherein the first test condition is a condition under which said hematology analyzer performs the initial test on the first blood sample, and the second test condition is a condition under which said hematology analyzer performs the retest on the second blood sample.

10. The sample analysis system of claim 1, wherein the sample analysis system (100) further comprises a second transport apparatus, wherein
the second transport apparatus is configured to transport the sample slide from the sample slide preparation apparatus (140) to the sample image capturing apparatus (150), so as to capture the sample image.

11. A sample analysis method, comprising:
obtaining (S1210) a sample analysis result of a first test blood sample of a subject;
obtaining (S1220) a sample image of a sample region on a sample slide of the first test blood sample, when the sample analysis result satisfies a preset condition which is that the output result of the haematology analyzer is abnormal; and
analyzing (S1230) the sample image, and generating a retest instruction and sending the retest instruction to a hematology analyzer (110), so that the hematology analyzer retests a second test blood sample of the subject, when the sample image contains information indicating that the first test blood sample is an abnormal sample.

12. The sample analysis method of claim 11, further comprising:
determining an abnormality type of the first test blood sample based on the sample image, and generating the retest instruction based on the abnormality type, wherein the retest instruction comprises an instruction that causes the hematology analyzer to perform a retest under a test condition corresponding to the abnormality type.

13. The sample analysis method of claim 12, wherein generating the retest instruction based on the abnormality type comprises:
generating the retest instruction that causes the hematology analyzer to analyze, the second test blood sample by using an optical method, when it is determined, based on the sample image, that the first test blood sample is at least one of a sample having a low platelet value, a sample having platelet aggregation, a sample having erythrocyte fragments, a sample having leukocyte fragments, a sample having microcytes, and a sample having large platelets; and/or
generating the retest instruction that causes the hematology analyzer to treat the second test blood sample with a platelet disaggregation reagent, when it is determined, based on the sample image, that the first test blood sample is a sample having a low platelet value or a sample having platelet aggregation.

14. The sample analysis method of claim 12, wherein generating the retest instruction based on the abnormality type comprises at least one of the following:
generating the retest instruction that causes the hematology analyzer to analyze erythrocytes in the second test blood sample by using an optical method, when it is determined, based on the sample image, that the first test blood sample is a sample having erythrocyte aggregation;
generating the retest instruction that causes the hematology analyzer to analyze hemoglobin in the second test blood sample by using an optical method, when it is determined, based on the sample image, that the first test blood sample is a sample having a falsely elevated hemoglobin; and
generating the retest instruction that causes the hematology analyzer to count leukocytes in the second test blood sample by using a leukocyte differential channel, when it is determined, based on the sample image, that the first test blood sample is a sample having leukocyte aggregation.

15. The sample analysis method of any one of claims 11 to 14, wherein the analysis on the first test blood sample is performed under a first test condition, and the retest on the second test blood sample is performed under a second test condition corresponding to the retest instruction, and the second test condition is different from the first test condition, wherein the first test condition is a condition under which the hematology analyzer performs an initial test on the first blood sample, and the second test condition is a condition under which the hematology analyzer performs the retest on the second blood sample.

## Patentansprüche

1. Ein Probenanalysesystem (100) mit mindestens einem Blutanalysegerät (110), einer Steuereinheit (120), einer ersten Transportvorrichtung (130), einer Vorrichtung zur Vorbereitung von Objektträgern (140) und einer Vorrichtung zur Erfassung von Probenbildern (150), wobei
eines der Blutanalysegeräte dazu konfiguriert ist, einen ersten Test an einer ersten Testblutprobe eines Patienten durchzuführen, zu analysieren und ein Testergebnis zu erhalten;
die Steuereinheit (120) dazu konfiguriert ist, die erste Transportvorrichtung (130) so zu steuern, dass die erste Testblutprobe an die Vorrichtung zur Vorbereitung von Objektträgern (140) transportiert wird, wenn das Testergebnis eine vorgegebene Bedingung erfüllt, und zwar, dass das Ausgaberesultat des Blutanalysegeräts abnormal ist;
die Vorrichtung zur Vorbereitung von Objektträgern (140) dazu konfiguriert ist, einen Objektträger der ersten Testblutprobe vorzubereiten;
die Vorrichtung zur Erfassung von Probenbildern (150) dazu konfiguriert ist, ein Probenbild eines Bezugsbereichs auf dem Objektträger aufzunehmen;
mit der Eigenschaft,
dass die Steuereinheit (120) ferner dazu konfiguriert ist, eine Anweisung zur Wiederholung des Tests zu erzeugen und diese an eines der Blutanalysegeräte (110) zu senden, sodass das genannte Blutanalysegerät (110) eine zweite Testblutprobe des Patienten erneut testet, wenn das Probenbild Informationen enthält, die darauf hinweisen, dass es sich bei der ersten Testblutprobe um eine abnormale Probe handelt.

2. Probenanalysesystem nach Anspruch 1, wobei es sich bei der Steuereinheit (120) um eine zentrale Steuereinheit handelt, die ferner dazu konfiguriert ist:
das Probenbild von der Vorrichtung zur Erfassung von Probenbildern (150) zu empfangen, zu analysieren und
die Anweisung zur Wiederholung des Tests zu erzeugen und
an das genannte Blutanalysegerät (110) zu senden, sodass dieses den Wiederholungstest durchführt, wenn gemäß der Analyse festgestellt wird, dass das Probenbild Informationen enthält, die darauf hinweisen, dass es sich bei der ersten Testblutprobe um eine abnormale Probe handelt.

3. Probenanalysesystem nach Anspruch 1,wobei die Steuereinheit (120) in die Vorrichtung zur Erfassung von Probenbildern (150) integriert ist, und die Steuereinheit ferner dazu konfiguriert ist:
das Probenbild zu empfangen, zu analysieren und die Anweisung zur Wiederholung des Tests zu erzeugen und an das genannte Blutanalysegerät zu senden, sodass dieses den Wiederholungstest durchführt, wenn gemäß der Analyse festgestellt wird, dass das Probenbild Informationen enthält, die darauf hinweisen, dass es sich bei der ersten Testblutprobe um eine abnormale Probe handelt.

4. Probenanalysesystem nach Anspruch 1, wobei die Steuereinheit (120) in das genannte Blutanalysegerät (110) integriert ist und ferner dazu konfiguriert ist:
das Probenbild von der Vorrichtung zur Erfassung von Probenbildern (150) zu empfangen, zu analysieren und
die Anweisung zur Wiederholung des Tests zu erzeugen,
um das genannte Blutanalysegerät (110) zur Durchführung des Wiederholungstests zu steuern, wenn gemäß der Analyse festgestellt wird, dass das Probenbild Informationen enthält, die darauf hinweisen, dass es sich bei der ersten Testblutprobe um eine abnormale Probe handelt.

5. Probenanalysesystem nach Anspruch 1, wobei die Steuereinheit (120) in die Vorrichtung zur Vorbereitung von Objektträgern (140) integriert ist und ferner dazu konfiguriert ist:
das Probenbild zu empfangen, zu analysieren und die Anweisung zur Wiederholung des Tests zu erzeugen und an das genannte Blutanalysegerät (110) zu senden, sodass dieses den Wiederholungstest durchführt, wenn gemäß der Analyse festgestellt wird, dass das Probenbild Informationen enthält, die darauf hinweisen, dass es sich bei der ersten Testblutprobe um eine abnormale Probe handelt.

6. Probenanalysesystem nach einem der Ansprüche 1 - 5, wobei die Steuereinheit (120) ferner dazu konfiguriert ist:
den Abnormalitätstyp der ersten Testblutprobe basierend auf dem Probenbild zu bestimmen und die Anweisung zur Wiederholung des Tests basierend auf dem Abnormalitätstyp zu erzeugen, wobei die Anweisung zur Wiederholung des Tests eine Anweisung umfasst, die das genannte Blutanalysegerät dazu veranlasst, den Wiederholungstest unter einer Testbedingung durchzuführen, die dem Abnormalitätstyp entspricht.

7. Probenanalysesystem nach Anspruch 6,wobei die Steuereinheit (120) ferner dazu konfiguriert ist:
die Anweisung zur Wiederholung des Tests zu erzeugen, die das genannte Blutanalysegerät (110) dazu veranlasst, die zweite Testblutprobe mittels eines optischen Verfahrens zu analysieren, wenn auf Grundlage des Probenbildes festgestellt wird, dass die erste Testblutprobe mindestens eine der folgenden Eigenschaften aufweist: eine Probe mit niedrigem Thrombozytenwert, eine Probe mit Thrombozytenaggregation, eine Probe mit Erythrozytenfragmenten, eine Probe mit Leukozytenfragmenten, eine Probe mit Mikrozyten und eine Probe mit großen Thrombozyten; und/oder
die Anweisung zur Wiederholung des Tests zu erzeugen, die das genannte Blutanalysegerät (110) dazu veranlasst, die zweite Testblutprobe mit einem Reagenz zur Aufspaltung von Thrombozyten zu behandeln, wenn auf Grundlage des Probenbildes festgestellt wird, dass es sich bei der ersten Testblutprobe um eine Probe mit niedrigem Thrombozytenwert oder mit Thrombozytenaggregation handelt.

8. Probenanalysesystem nach Anspruch 6, wobei die Steuereinheit (120) ferner dazu konfiguriert ist, mindestens eine der folgenden Maßnahmen auszuführen:
Erzeugen der Anweisung zur Wiederholung des Tests, die das genannte Blutanalysegerät (110) dazu veranlasst, Erythrozyten in der zweiten Testblutprobe mittels eines optischen Verfahrens zu analysieren, wenn auf Grundlage des Probenbildes festgestellt wird, dass es sich bei der ersten Testblutprobe um eine Probe mit Erythrozytenaggregation handelt;
Erzeugen der Anweisung zur Wiederholung des Tests, die das genannte Blutanalysegerät (110) dazu veranlasst, Hämoglobin in der zweiten Testblutprobe mittels eines optischen Verfahrens zu analysieren, wenn auf Grundlage des Probenbildes festgestellt wird, dass es sich bei der ersten Testblutprobe um eine Probe mit falsch erhöhtem Hämoglobinwert handelt; und
Erzeugen der Anweisung zur Wiederholung des Tests, die das genannte Blutanalysegerät (110) dazu veranlasst, Leukozyten in der zweiten Testblutprobe über einen LeukozytenDifferenzierungskanal auszuzählen, wenn auf Grundlage des Probenbildes festgestellt wird, dass es sich bei der ersten Testblutprobe um eine Probe mit Leukozytenaggregation handelt.

9. Probenanalysesystem nach einem der Ansprüche 6 - 8, wobei das Blutanalysegerät (110) dazu konfiguriert ist, die erste Testblutprobe unter einer ersten Testbedingung zu analysieren;
und die zweite Testblutprobe nach Erhalt der Anweisung zur Wiederholung des Tests unter einer zweiten Testbedingung zu testen, die der Anweisung zur Wiederholung des Tests entspricht; wobei sich die zweite Testbedingung von der ersten Testbedingung unterscheidet, wobei es sich bei der ersten Testbedingung um eine Bedingung handelt, unter der das Blutanalysegerät den Ersttest an der ersten Blutprobe durchführt, und es sich bei der zweiten Testbedingung um eine Bedingung handelt, unter der das Blutanalysegerät den Wiederholungstest an der zweiten Blutprobe durchführt.

10. Das Probenanalysesystem nach Anspruch 1 umfasst ferner eine zweite Transporteinrichtung, die dazu konfiguriert ist,
den Probenträger von der Vorrichtung zur Vorbereitung von Objektträgern (140) zur Vorrichtung zur Erfassung von Probenbildern (150) zu transportieren, um das Probenbild aufzunehmen.

11. Ein Probenanalyseverfahren, das Folgendes umfasst:
Erhalten (S1210) eines Testergebnisses einer ersten Testblutprobe eines Patienten;
Erhalten (S1220) eines Probenbildes eines Bezugsbereichs auf einem Objektträger der ersten Testblutprobe, wenn das Testergebnis eine vorgegebene Bedingung erfüllt, und zwar, dass das Ausgaberesultat des Blutanalysegeräts abnormal ist; und
Analysieren (S1230) des Probenbildes sowie Erzeugen einer Anweisung zur Wiederholung des Tests und Senden der Anweisung zur Wiederholung des Tests an ein Blutanalzsegerät (110), um eine zweite Testblutprobe des Patienten erneut zu testen, wenn das Probenbild Informationen enthält, die darauf hinweisen, dass es sich bei der ersten Testblutprobe um eine abnormale Probe handelt.

12. Das Probenanalyseverfahren nach Anspruch 11 umfasst ferner:
Bestimmen eines Abnormalitätstyps der ersten Testblutprobe basierend auf dem Probenbild, und Erstellen der Anweisung zur Wiederholung des Tests basierend auf dem Abnormalitätstyp,
wobei die Anweisung zur Wiederholung des Tests das Blutanalysegerät dazu veranlasst, einen Wiederholungstest unter einer Testbedingung durchzuführen, die dem Abnormalitätstyp entspricht.

13. Probenanalyseverfahren nach Anspruch 12, wobei das Erstellen der Anweisung zur Wiederholung des Tests basierend auf dem Abnormalitätstyp Folgendes umfasst:
Erstellen der Anweisung zur Wiederholung des Tests, die das Blutanalysegerät dazu veranlasst, die zweite Testblutprobe mittels eines optischen Verfahrens zu analysieren, wenn auf Grundlage des Probenbildes festgestellt wird, dass die erste Testblutprobe mindestens eine der folgenden Eigenschaften aufweist: eine Probe mit niedrigem Thrombozytenwert, eine Probe mit Thrombozytenaggregation, eine Probe mit Erythrozytenfragmenten, eine Probe mit Leukozytenfragmenten, eine Probe mit Mikrozyten und eine Probe mit großen Thrombozyten; und/oder
Erstellen der Anweisung zur Wiederholung des Tests, die das Blutanalysegerät dazu veranlasst, die zweite Testblutprobe mit einem Reagenz zur Aufspaltung von Thrombozyten zu behandeln, wenn auf Grundlage des Probenbildes festgestellt wird, dass es sich bei der ersten Testblutprobe um eine Probe mit niedrigem Thrombozytenwert oder um eine Probe mit Thrombozytenaggregation handelt.

14. Probenanalyseverfahren nach Anspruch 12, wobei das Erstellen der Anweisung zur Wiederholung des Tests basierend auf dem Abnormalitätstyp mindestens einen der folgenden Schritte umfasst:
Erstellen der Anweisung zur Wiederholung des Tests, die das Blutanalysegerät dazu veranlasst, Erythrozyten in der zweiten Testblutprobe mittels eines optischen Verfahrens zu analysieren, wenn auf Grundlage des Probenbildes festgestellt wird, dass es sich bei der ersten Testblutprobe um eine Probe mit Erythrozytenaggregation handelt;
Erstellen der Anweisung zur Wiederholung des Tests, die das Blutanalysegerät dazu veranlasst, Hämoglobin in der zweiten Testblutprobe mittels eines optischen Verfahrens zu analysieren, wenn auf Grundlage des Probenbildes festgestellt wird, dass es sich bei der ersten Testblutprobe um eine Probe mit falsch erhöhtem Hämoglobinwert handelt; und
Erstellen der Anweisung zur Wiederholung des Tests, die das Blutanalysegerät dazu veranlasst, Leukozyten in der zweiten Testblutprobe über einen Leukozytendifferenzierungskanal auszuzählen, wenn auf Grundlage des Probenbildes festgestellt wird, dass es sich bei der ersten Testblutprobe um eine Probe mit Leukozytenaggregation handelt.

15. Probenanalyseverfahren nach einem der Ansprüche 11 - 14, wobei die Analyse der ersten Testblutprobe unter einer ersten Testbedingung durchgeführt wird, und der Wiederholungstest an der zweiten Testblutprobe unter einer zweiten Testbedingung durchgeführt wird, die der Anweisung zur Wiederholung des Tests entspricht, wobei sich die zweite Testbedingung von der ersten Testbedingung unterscheidet, wobei das Blutanalysegerät bei der ersten Testbedingung den Ersttest an der ersten Blutprobe durchführt, und bei der zweiten Testbedingung den Wiederholungstest an der zweiten Blutprobe durchführt.

## Revendications

1. Système d'analyse d'échantillons (100), comprenant au moins un dispositif d'analyse d'hématologie (110) , un dispositif de commande (120), un premier dispositif de transport (130), un dispositif de préparation de lame d'échantillon (140), et un dispositif d'acquisition d'image d'échantillon (150), où
un des au moins un dispositifs d'analyse d'hématologie est configuré pour réaliser un test initial sur un premier échantillon de sang de test d'un sujet, de sorte à analyser le premier échantillon de sang de test et obtenir un résultat d'analyse d'échantillon ;
le dispositif de commande (120) est configuré pour commander le premier dispositif de transport (130) pour transporter le premier échantillon de sang de test vers le dispositif de préparation de lame d'échantillon (140), lorsque le résultat d'analyse d'échantillon remplit une condition prédéfinie laquelle est que le résultat de sortie du dispositif d'analyse d'hématologie est anormal ;
le dispositif de préparation de lame d'échantillon (140) est configuré pour préparer une lame d'échantillon du premier échantillon de sang de test ;
le dispositif d'acquisition d'image d'échantillon (150) est configuré pour acquérir une image d'échantillon d'une région d'échantillon sur la lame d'échantillon ;
**caractérisé en ce que**
le dispositif de commande (120) est en outre configuré pour générer une instruction de nouveau test et envoyer l'instruction de nouveau test à l'un des au moins un dispositifs d'analyse d'hématologie (110), de sorte que ledit dispositif d'analyse d'hématologie (110) procède à un nouveau test sur un second échantillon de sang de test du sujet, lorsque l'image d'échantillon contient des informations indiquant que le premier échantillon de sang de test est un échantillon anormal.

2. Système d'analyse d'échantillons selon la revendication 1, dans lequel le dispositif de commande (120) est un dispositif de commande central qui est en outre configuré pour :
obtenir une image d'échantillon à partir du dispositif d'acquisition d'image d'échantillon (150),
analyser l'image d'échantillon, et
générer l'instruction de nouveau test et envoyer l'instruction de nouveau test audit dispositif d'analyse d'hématologie (110), de sorte que ledit dispositif d'analyse d'hématologie procède au nouveau test, lorsqu'il est déterminé, sur la base de l'analyse, que l'image d'échantillon contient des informations indiquant que le premier échantillon de sang de test est un échantillon anormal.

3. Système d'analyse d'échantillons selon la revendication 1, dans lequel le dispositif de commande (120) est intégré dans le dispositif d'acquisition d'image d'échantillon (150), et le dispositif de commande est en outre configuré pour :
obtenir l'image d'échantillon,
analyser l'image d'échantillon, et
générer l'instruction de nouveau test et envoyer l'instruction de nouveau test audit dispositif d'analyse d'hématologie (110), de sorte que ledit dispositif d'analyse d'hématologie procède au nouveau test, lorsqu'il est déterminé, sur la base de l'analyse, que l'image d'échantillon contient des informations indiquant que le premier échantillon de sang de test est un échantillon anormal.

4. Système d'analyse d'échantillons selon la revendication 1, dans lequel le dispositif de commande (120) est intégré dans ledit dispositif d'analyse d'hématologie (110), et le dispositif de commande (120) est en outre configuré pour :
obtenir l'image d'échantillon à partir du dispositif d'acquisition d'image d'échantillon (150),
analyser l'image d'échantillon, et
générer l'instruction de nouveau test pour commander audit dispositif d'analyse d'hématologie (110) de procéder au nouveau test, lorsqu'il est déterminé, sur la base de l'analyse, que l'image d'échantillon contient des informations indiquant que le premier échantillon de sang de test est un échantillon anormal.

5. Système d'analyse d'échantillons selon la revendication 1, dans lequel le dispositif de commande (120) est intégré dans le dispositif de préparation de lame d'échantillon (140), et le dispositif de commande (120) est en outre configuré pour :
obtenir l'image d'échantillon,
analyser l'image d'échantillon, et
générer l'instruction de nouveau test et envoyer l'instruction de nouveau test audit dispositif d'analyse d'hématologie (110), de sorte que ledit dispositif d'analyse d'hématologie procède au nouveau test, lorsqu'il est déterminé, sur la base de l'analyse, que l'image d'échantillon contient des informations indiquant que le premier échantillon de sang de test est un échantillon anormal.

6. Système d'analyse d'échantillons selon l'une quelconque des revendications 1 à 5, dans lequel le dispositif de commande (120) est en outre configuré pour :
déterminer un type d'anomalie du premier échantillon de sang de test sur la base de l'image d'échantillon, et générer l'instruction de nouveau test sur la base du type d'anomalie, où l'instruction de nouveau test comprend une instruction qui amène ledit dispositif d'analyse d'hématologie à procéder au nouveau test sous une condition de test correspondant au type d'anomalie.

7. Système d'analyse d'échantillons selon la revendication 6, dans lequel le dispositif de commande (120) est en outre configuré pour :
générer l'instruction de nouveau test qui amène ledit dispositif d'analyse d'hématologie (110) à analyser le second échantillon de sang de test en utilisant un procédé optique, lorsqu'il est déterminé, sur la base de l'image d'échantillon, que le premier échantillon de sang de test est au moins un d'un échantillon présentant une faible valeur de plaquettes, d'un échantillon présentant une agrégation plaquettaire, d'un échantillon présentant des fragments d'érythrocyte, d'un échantillon présentant des fragments de leucocyte, d'un échantillon présentant des microcytes, et d'un échantillon présentant de grandes plaquettes ; et/ou
générer l'instruction de nouveau test qui amène ledit dispositif d'analyse d'hématologie (110) à traiter le second échantillon de sang de test avec un réactif de désagrégation plaquettaire, lorsqu'il est déterminé, sur la base de l'image d'échantillon, que le premier échantillon de sang de test est un échantillon présentant une faible valeur de plaquettes ou un échantillon présentant une agrégation plaquettaire.

8. Système d'analyse d'échantillons selon la revendication 6, dans lequel le dispositif de commande (120) est en outre configuré pour réaliser au moins l'un de ce qui suit :
générer l'instruction de nouveau test qui amène ledit dispositif d'analyse d'hématologie (110) à analyser des érythrocytes dans le second échantillon de sang de test en utilisant un procédé optique, lorsqu'il est déterminé, sur la base de l'image d'échantillon, que le premier échantillon de sang de test est un échantillon présentant une agrégation érythrocytaire ;
générer l'instruction de nouveau test qui amène ledit dispositif d'analyse d'hématologie (110) à analyser l'hémoglobine dans le second échantillon de sang de test en utilisant un procédé optique, lorsqu'il est déterminé, sur la base de l'image d'échantillon, que le premier échantillon de sang de test est un échantillon présentant une hémoglobine faussement élevée ;
générer l'instruction de nouveau test qui amène ledit dispositif d'analyse d'hématologie (110) à compter des leucocytes dans le second échantillon de sang de test en utilisant un canal différentiel de leucocyte, lorsqu'il est déterminé, sur la base de l'image d'échantillon, que le premier échantillon de sang de test est un échantillon présentant une agrégation leucocytaire.

9. Système d'analyse d'échantillons selon l'une quelconque des revendications 6 à 8, dans lequel le dispositif d'analyse d'hématologie (110) est configuré pour analyser le premier échantillon de sang de test sous une première condition de test ; ledit dispositif d'analyse d'hématologie est en outre configuré pour procéder au nouveau test sur le second échantillon de sang de test sous une seconde condition de test correspondant à l'instruction de nouveau test, après avoir reçu l'instruction de nouveau test ; où la seconde condition de test est différente de la première condition de test, où la première condition de test est une condition sous laquelle ledit dispositif d'analyse d'hématologie réalise le test initial sur le premier échantillon de sang, et la seconde condition de test est une condition sous laquelle ledit dispositif d'analyse d'hématologie réalise le nouveau test sur le second échantillon de sang.

10. Système d'analyse d'échantillons selon la revendication 1, où le système d'analyse d'échantillons (100) comprend en outre un second dispositif de transport, où
le second dispositif de transport est configuré pour transporter la lame d'échantillon depuis le dispositif de préparation de lame d'échantillon (140) jusqu'au dispositif d'acquisition d'image d'échantillon (150), de sorte à acquérir l'image d'échantillon.

11. Procédé d'analyse d'échantillons, comprenant les étapes consistant à :
obtenir (S1210) un résultat d'analyse d'échantillon d'un premier échantillon de sang de test d'un sujet ;
obtenir (S1220) une image d'échantillon d'une région d'échantillon sur une lame d'échantillon du premier échantillon de sang de test, lorsque le résultat d'analyse d'échantillon remplit une condition prédéfinie laquelle est que le résultat de sortie du dispositif d'analyse d'hématologie est anormal ; et
analyser (S1230) l'image d'échantillon, et générer une instruction de nouveau test et envoyer l'instruction de nouveau test à un dispositif d'analyse d'hématologie (110), de sorte que le dispositif d'analyse d'hématologie procède à un nouveau test sur un second échantillon de sang de test du sujet, lorsque l'image d'échantillon contient des informations indiquant que le premier échantillon de sang de test est un échantillon anormal.

12. Procédé d'analyse d'échantillons selon la revendication 11, comprenant en outre :
le fait de déterminer un type d'anomalie du premier échantillon de sang de test sur la base de l'image d'échantillon, et générer l'instruction de nouveau test sur la base du type d'anomalie, où l'instruction de nouveau test comprend une instruction qui amène le dispositif d'analyse d'hématologie à procéder à un nouveau test sous une condition de test correspondant au type d'anomalie.

13. Procédé d'analyse d'échantillons selon la revendication 12, où le fait de générer l'instruction de nouveau test sur la base du type d'anomalie comprend :
le fait de générer l'instruction de nouveau test qui amène le dispositif d'analyse d'hématologie à analyser le second échantillon de sang de test en utilisant un procédé optique, lorsqu'il est déterminé, sur la base de l'image d'échantillon, que le premier échantillon de sang de test est au moins un d'un échantillon présentant une faible valeur de plaquettes, d'un échantillon présentant une agrégation plaquettaire, d'un échantillon présentant des fragments d'érythrocyte, d'un échantillon présentant des fragments de leucocyte, d'un échantillon présentant des microcytes, et d'un échantillon présentant de grandes plaquettes ; et/ou
le fait de générer l'instruction de nouveau test qui amène le dispositif d'analyse d'hématologie à traiter le second échantillon de sang de test avec un réactif de désagrégation plaquettaire, lorsqu'il est déterminé, sur la base de l'image d'échantillon, que le premier échantillon de sang de test est un échantillon présentant une faible valeur de plaquettes ou un échantillon présentant une agrégation plaquettaire.

14. Procédé d'analyse d'échantillons selon la revendication 12, où le fait de générer l'instruction de nouveau test sur la base du type d'anomalie comprend au moins l'un de ce qui suit :
générer l'instruction de nouveau test qui amène le dispositif d'analyse d'hématologie à analyser des érythrocytes dans le second échantillon de sang de test en utilisant un procédé optique, lorsqu'il est déterminé, sur la base de l'image d'échantillon, que le premier échantillon de sang de test est un échantillon présentant une agrégation érythrocytaire ;
générer l'instruction de nouveau test qui amène le dispositif d'analyse d'hématologie à analyser l'hémoglobine dans le second échantillon de sang de test en utilisant un procédé optique, lorsqu'il est déterminé, sur la base de l'image d'échantillon, que le premier échantillon de sang de test est un échantillon présentant une hémoglobine faussement élevée ; et
générer l'instruction de nouveau test qui amène le dispositif d'analyse d'hématologie à compter des leucocytes dans le second échantillon de sang de test en utilisant un canal différentiel de leucocyte, lorsqu'il est déterminé, sur la base de l'image d'échantillon, que le premier échantillon de sang de test est un échantillon présentant une agrégation leucocytaire.

15. Procédé d'analyse d'échantillons selon l'une quelconque des revendications 11 à 14, où l'analyse sur le premier échantillon de sang de test est réalisée sous une première condition de test, et le nouveau test sur le second échantillon de sang de test est réalisé sous une seconde condition de test correspondant à l'instruction de nouveau test, et la seconde condition de test est différente de la première condition de test, où la première condition de test est une condition sous laquelle le dispositif d'analyse d'hématologie réalise un test initial sur le premier échantillon de sang, et la seconde condition de test est une condition sous laquelle le dispositif d'analyse d'hématologie réalise le nouveau test sur le second échantillon de sang.
